# DEMANDE DE BREVET EUROPEEN

(11) **EP 1 071 284 A1**
(43) Date de publication de la demande: **24.01.2001**
(21) Numéro de dépôt: 00460044.1
(22) Date de dépôt: 13.07.2000
(51) Int. Cl.: H04N 7/088

(54) **Procédé d'affichage d'en-têtes télétexte.**

(30) Priorité: 19.07.1999 FR 9909491
(71) Demandeur: STMicroelectronics S.A., 94250 Gentilly (FR)
(72) Inventeur: Tauzia, Vincent, 56100 Lorient (FR); Crespo, Thierry, 56100 Lorient (FR)
(74) Mandataire: Ballot, Paul

(57) **Abrégé**

La présente invention concerne un procédé d'affichage d'en-têtes télétexte pendant la recherche d'une page télétexte. Le service télétexte utilise pour l'affichage des en-têtes et des pages télétexte un premier ensemble de caractères comportant des caractères fixés et des emplacements pour recevoir des caractères variables et un second ensemble de jeux de caractères, chaque jeu de caractères étant propre à une langue et étant destiné à être introduit sélectivement aux emplacements de caractères variables du premier ensemble. Selon l'invention, le jeu de caractères à introduire dans le premier ensemble est sélectionné dès que le premier paquet de données permettant de l'identifier est reçu par le récepteur TV de telle sorte que les en-têtes sont affichés correctement.

## Description

La présente invention concerne un procédé d'affichage d'en-têtes télétexte pendant la recherche d'une page télétexte.

Le télétexte est un service annexe des chaînes de télévision destiné à transmettre des informations écrites en plus des informations vidéo. Ces informations sont transportées dans des paquets de données transmis dans les intervalles de temps correspondant au retour trame entre deux images. Lorsqu'on lance le service télétexte d'une chaîne de télévision, le récepteur de télévision recherche automatiquement la page 100 qui est la page de sommaire sur laquelle sont présentées les différentes rubriques proposées par la chaîne. Un numéro de page est associé à chaque rubrique. Pour accéder à une rubrique particulière, il suffit de composer le numéro de page associé.

Lors de la recherche d'une page télétexte, des en-têtes se rapportant aux pages télétexte reçues par le récepteur TV s'affichent à l'écran au fur et à mesure de leur réception. Les données contenues dans l'en-tête d'une page télétexte sont contenues dans un paquet d'en-tête (désigné par le terme « header packet » en langage technique) correspondant au premier paquet de données de la page. L'en-tête comporte généralement un champ où est inscrit le nom de la chaîne émettant la page télétexte et un champ où est inscrit le numéro de la page télétexte auquel il se rapporte. Le téléviseur affiche généralement avec cet en-tête le numéro de la page recherchée et l'heure. Ces en-têtes sont affichés sur l'écran jusqu'à ce que la page recherchée soit reçue par le récepteur TV. La page recherchée s'affiche alors à l'écran et l'en-tête disparaît. A noter que certains téléviseurs haut de gamme peuvent mémoriser une fois pour toutes les pages télétexte dès réception ou tout au moins la page de sommaire de chaque chaîne. Les en-têtes ne sont alors affichés lors d'une recherche que si la page recherchée n'est pas déjà mémorisée.

La police de caractères utilisée par le récepteur de télévision pour l'affichage des en-têtes et des pages télétexte est classiquement stockée dans une mémoire ROM du récepteur. Les caractères de cette police sont répartis dans trois ensembles :
- un premier ensemble appelé ensemble primaire GO qui regroupe les caractères de l'alphabet utilisé pour écrire le contenu des pages (par exemple, l'alphabet latin pour les chaînes européennes) ; ce premier ensemble comporte des caractères fixés et des emplacements pour recevoir des caractères variables ;
- un second ensemble comportant une pluralité de jeux de caractères regroupant chacun des caractères spécifiques à une langue (par exemple, un jeu contenant des caractères spécifiques à la langue française comportant notamment les voyelles accentuées) ; chaque jeu comporte classiquement 13 caractères ;
- un ensemble supplémentaire G2 (non décrit);

Classiquement, préalablement à l'affichage d'une page télétexte, un jeu de caractères du second ensemble est sélectionné par le récepteur TV puis inséré dans le premier ensemble aux emplacements des caractères variables. Le jeu de caractères à sélectionner pour l'affichage de cette page est identifié par les bits de contrôle C12, C13 et C14 contenus dans le treizième octet de son paquet d'en-tête. Ces bits de contrôle sont fonction de la langue dans laquelle est rédigée la page télétexte à afficher. Par exemple, si la page est en français (c'est le cas des chaînes françaises), les bits C12 à C14 contiennent l'adresse ou une partie de l'adresse du jeu de caractères se rapportant à la langue française dans la mémoire ROM du récepteur TV. Ainsi, avant l'affichage d'une page télétexte, le microcontrôleur du récepteur TV vient lire les bits C12 à C14 du paquet d'en-tête de cette page et sélectionne le jeu de caractères correspondant. Il procède ensuite à l'affichage de la page télétexte avec les caractères fixés du premier ensemble et les caractères du jeu sélectionné dans le second ensemble.

A noter que l'adresse du jeu de caractères variables est également contenu dans des paquets spéciaux non affichables appelés X28 et M29. Ces paquets sont diffusés par un nombre limité de chaînes de télévision. Ces paquets peuvent être émis avant ou après le paquet d'en-tête d'une page télétexte.

Un problème se pose pour l'affichage des en-têtes lorsque l'utilisateur déclenche le service télétexte après avoir changé de chaîne et être passé sur une chaîne de nationalité différente (c'est-à-dire pour laquelle les pages télétexte et les en-têtes sont rédigés dans une autre langue). Lors de la recherche télétexte, les en-têtes sont alors affichés avec un ensemble de caractères incorrect puisque le jeu de caractères sélectionné n'a pas été modifié depuis le changement de chaîne. Il n'est modifié qu'à la fin de la recherche, juste avant l'affichage de la page télétexte recherchée.

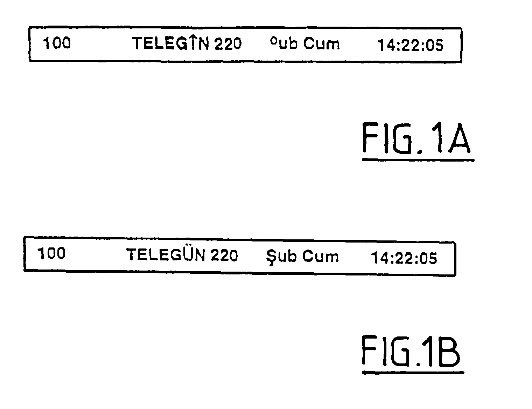

Ce problème est exposé au travers d'un exemple illustré par les figures lA et 1B. Dans cet exemple, un utilisateur regarde une chaîne de télévision italienne, par exemple la RAI Uno, puis change de chaîne et passe sur le réseau turc IRT pour regarder une chaîne turque, TELEGÜN. L'utilisateur déclenche alors le service télétexte pour rechercher la page de sommaire (page 100) de la chaîne turque. Lors de cette recherche, des en-têtes s'affichent sur l'écran. Ces derniers sont du type de celui représenté sur la figure lA. L'en-tête présenté à la figure lA est celui de la page télétexte 220 de la chaîne turque. En supposant que la dernière page télétexte affichée était une page télétexte de la RAI Uno, les en-têtes sont affichés avec le jeu de caractères associé à la langue italienne (figure 1A).

Ce jeu de caractères étant différent de celui associé à la langue turque, des erreurs apparaissent dans le libellé du nom de la chaîne turque. TELEG↑N est affiché à la place de TELEGÜN et °ub est affiché à la place de $ub. Les caractères ↑ et Ü sont en effet des caractères variables appartenant respectivement aux jeux de caractères italien et turc, et ils sont par ailleurs introduits au même emplacement dans le premier ensemble lorsque leur jeu est sélectionné. Il en est de même pour les caractères ° et $. La figure 1B montre le même en-tête mais affiché avec le jeu de caractères turc.

L'invention a pour but de pallier ce problème d'affichage des en-têtes.

Selon l'invention, la sélection du jeu de caractères est effectuée au début de la recherche dès qu'un paquet de données permettant d'identifier ce jeu de caractères a été reçu par le récepteur TV.

Aussi, l'invention a donc pour objet un procédé d'affichage d'en-têtes télétexte sur un écran de récepteur de télévision pendant la recherche d'une page télétexte, le service télétexte utilisant dans ledit récepteur un premier ensemble de caractères comportant des caractères fixés et des emplacements pour recevoir des caractères variables et un second ensemble de jeux de caractères, chaque jeu de caractères étant propre à une langue et étant destiné à être introduit sélectivement aux emplacements de caractères variables dudit premier ensemble, caractérisé en ce qu'il comporte les étapes suivantes :
- décoder des bits de contrôle dans le premier des paquets de données reçus par le récepteur de télévision au cours de la recherche permettant de déterminer un jeu de caractères dudit second ensemble;
- sélectionner ledit jeu de caractères;
- afficher, avec les caractères dudit premier ensemble comportant ses caractères fixés et les caractères dudit jeu sélectionné, l'en-tête des pages télétexte reçues jusqu'à recevoir la page télétexte recherchée.

Ce premier paquet est soit le paquet d'en-tête de la première page télétexte reçue, soit un paquet X28 ou un paquet M29.

D'autres caractéristiques et avantages de l'invention apparaîtront à la lecture de description détaillée qui suit et qui est faite en référence aux dessins annexés, parmi lesquels :
- les figures 1A et 1B, déjà décrites, représentent un en-tête d'une page télétexte d'une chaîne turque affiché avec un jeu de caractères italien et un jeu de caractères turc ; et
- la figure 2 représente un organigramme des étapes du procédé de l'invention.

Selon l'invention, la sélection du jeu de caractères pour l'affichage des en-têtes et des pages télétexte est effectuée au tout début de la recherche d'une page télétexte. En pratique, lorsque la recherche est lancée, le microcontrôleur du récepteur TV reçoit une première page télétexte et mémorise les données du paquet d'en-tête dans un circuit tampon d'acquisition. Puis, suivant l'état de bits de contrôle particuliers, C7, C9 et C11, il autorise ou non le transfert des données affichables du paquet d'en-tête dans la mémoire d'affichage du récepteur TV.

Puis, si le microprocesseur a reçu le paquet d'en-tête avant un paquet X28 ou M29, il lit les bits de contrôle C12 à C14 de ce paquet puis sélectionne, dans la mémoire ROM du récepteur, le jeu de caractères correspondant. Le microcontrôleur transfère ensuite les caractères fixés du premier ensemble et les caractères du jeu de paramètres sélectionné dans un de ses registres. Ce registre contient alors l'ensemble des caractères alphabétiques à utiliser pour afficher les en-têtes et les pages télétexte de la chaîne de télévision reçue. Le microcontrôleur procède ensuite à l'affichage des données affichables du paquet d'en-tête de cette première page en utilisant les caractères alphabétiques contenus dans le registre précité.

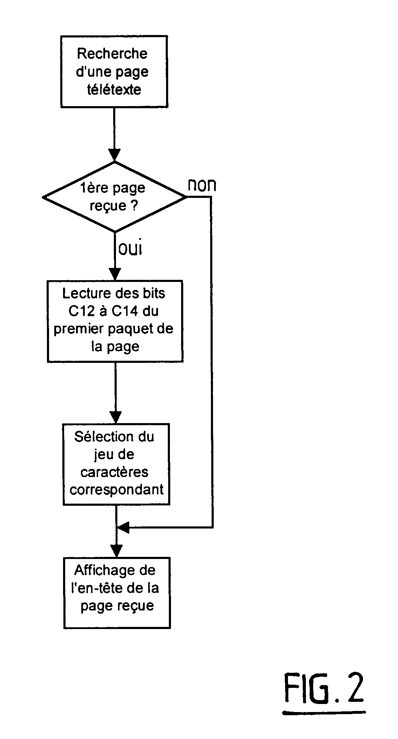

Les étapes du procédé de l'invention décrites précédemment sont résumées dans l'organigramme à la figure 2. Bien entendu, pour l'en tête des autres pages télétexte reçues par le récepteur TV, il est inutile de procéder à nouveau à la lecture des bits de contrôle C12, C13, C14 puisque toutes les pages télétexte et les en-têtes se rapportant à une même chaîne de télévision utilisent le même jeu de caractères. Il est également inutile de le faire pour l'affichage de la page télétexte recherchée.

Dans le cas où le microprocesseur reçoit un paquet X28 ou M29 avant le paquet d'en-tête, celui-ci procède à la lecture de ce paquet pour sélectionner le jeu de caractères dans le second ensemble au lieu de lire les bits C12 à C14 du paquet d'en-tête. Cela permet ainsi de sélectionner le jeu de caractères variables le plus tôt possible de façon à obtenir un affichage correct des en-têtes pendant la recherche télétexte.

## Revendications

1. Procédé d'affichage d'en-têtes télétexte sur un écran de récepteur de télévision pendant la recherche d'une page télétexte, le service télétexte utilisant dans ledit récepteur un premier ensemble de caractères comportant des caractères fixés et des emplacements pour recevoir des caractères variables et un second ensemble de jeux de caractères, chaque jeu de caractères étant propre à une langue et étant destiné à être introduit sélectivement aux emplacements de caractères variables dudit premier ensemble, caractérisé en ce qu'il comporte les étapes suivantes :
- décoder des bits de contrôle dans le premier des paquets de données reçus par le récepteur de télévision au cours de la recherche permettant de déterminer un jeu de caractères dudit second ensemble;
- sélectionner ledit jeu de caractères;
- afficher, avec les caractères dudit premier ensemble comportant ses caractères fixés et les caractères dudit jeu sélectionné, l'en-tête des pages télétexte reçues jusqu'à recevoir la page télétexte recherchée.

2. Procédé selon la revendication 1, caractérisé en ce que ledit premier des paquets de données permettant de déterminer un jeu de caractères dudit second ensemble est un paquet d'en-tête et en ce que les bits de contrôle à décoder sont les bits C12, C13, C14 dudit premier paquet d'en-tête.

3. Procédé selon la revendication 1, caractérisé en ce que ledit premier des paquets de données permettant de déterminer un jeu de caractères dudit second ensemble est un paquet X28.

4. Procédé selon la revendication 1, caractérisé en ce que ledit premier des paquets de données permettant de déterminer un jeu de caractères dudit second ensemble est un paquet M29.
